# EUROPEAN PATENT APPLICATION

(11) **EP 4 329 174 A1**
(43) Date of publication of application: **28.02.2024**
(21) Application number: 23193320.1
(22) Date of filing: 24.08.2023
(51) Int. Cl.: H02M 1/10, H02M 3/335, H02M 1/36

(54) **POWER SUPPLY SWITCHING APPARATUS AND MULTI-INPUT POWER SUPPLY**

(30) Priority: 26.08.2022 CN 202211033572
(71) Applicant: Huawei Digital Power Technologies Co., Ltd., Shenzhen, Guangdong 518043 (CN)
(72) Inventor: ZHAO, Dongsheng, 518043 Shenzhen (CN); HUANG, Jinliang, 518043 Shenzhen (CN)
(74) Representative: Gill Jennings & Every LLP

(57) **Abstract**

This application provides a power supply switching apparatus and a multi-input power supply, which is applicable to the field of power supply technologies. In the technical solution of this application, a voltage output by a secondary winding of a transformer in a power conversion circuit is reused to provide a working voltage for a multi-input switching relay. Compared with using an additional boost circuit to provide a higher working voltage for the multi-input switching relay, this can reduce an occupied board area, save costs, and reduce control complexity of the power supply switching apparatus.

## Description

### TECHNICAL FIELD

This application relates to the field of power supply technologies, and in particular, to a power supply switching apparatus and a multi-input power supply.

### BACKGROUND

A multi-input power supply includes a plurality of power supply input terminals, and each of the plurality of power supply input terminals may be allowed to access one input source. In this way, backup of the input source can be implemented without increasing a quantity of power supplies, thereby improving reliability of the power supply.

In addition, the multi-input power supply further includes a multi-input switching relay, a power conversion circuit, and a plurality of auxiliary power supplies. The multi-input switching relay is configured to connect any one of the plurality of power supply input terminals to the power conversion circuit. The power conversion circuit is configured to convert an output voltage of the power supply input terminal into a voltage required by an electric device. The plurality of auxiliary power supplies are configured to provide electric energy for the multi-input switching relay and the power conversion circuit.

Because a voltage required when the power conversion circuit performs voltage conversion is low, and a voltage required when the multi-input switching relay switches a power supply input terminal connected to the power conversion circuit is high, an auxiliary power supply outputs a low voltage, to prevent the power conversion circuit from being damaged due to an excessively high voltage. However, an output voltage of the auxiliary power supply is low, which leads to a long switching time period of the multi-input switching relay, and even a switching failure may occur because a voltage output by the auxiliary power supply is insufficient to complete switching due to the long switching time period. Therefore, before the auxiliary power supply provides electric energy for the multi-input switching relay, the output voltage of the auxiliary power supply further needs to be boosted.

A method for supplying power to a multi-input switching relay by using an auxiliary power supply includes: adding a boost (boost) circuit and a large-capacity electrolytic capacitor after the auxiliary power supply, where the boost circuit may boost an output voltage of the auxiliary power supply to obtain a high voltage, and the large-capacity electrolytic capacitor may provide large instantaneous power.

However, in this method, the boost circuit includes a large quantity of components, resulting in a large occupied board area, complex driving, and high costs.

### SUMMARY

This application provides a power supply switching apparatus and a multi-input power supply, so as to solve problems in the prior art that a power supply switching apparatus has a large occupied board area, driving complexity, and high costs due to a large quantity of components of a boost circuit.

According to a first aspect, this application provides a power supply switching apparatus. The apparatus includes a plurality of power supply input terminals, a multi-input switching relay, a power conversion circuit, and a plurality of auxiliary power supplies. Each of the plurality of power supply input terminals is configured to receive a power supply signal. Each of the plurality of power supply input terminals is further configured to be connected to a first input terminal of the multi-input switching relay, and an output terminal of the multi-input switching relay is connected to a first input terminal of the power conversion circuit. The plurality of auxiliary power supplies one-to-one correspond to the plurality of power supply input terminals, a first input terminal of each of the plurality of auxiliary power supplies is connected to a corresponding power supply input terminal in the plurality of power supply input terminals, and an output terminal of each auxiliary power supply is connected to a second input terminal of the power conversion circuit. A first output terminal of the power conversion circuit is configured to be connected to an electric device.

The power supply switching apparatus further includes a power supply circuit. The power supply circuit is configured to receive an electrical signal through a first input terminal and a second input terminal of the power supply circuit, select a target input terminal from the first input terminal and the second input terminal of the power supply circuit to connect to an output terminal of the power supply circuit, and output the electrical signal through the output terminal of the power supply circuit, where a voltage of an electrical signal input at the target input terminal is greater than a voltage of an electrical signal input at an input terminal that is different from the target input terminal and that is of the power supply circuit.

The first input terminal of the power supply circuit is connected to the output terminal of each auxiliary power supply, and the second input terminal of the power supply circuit is connected to a second output terminal of the power conversion circuit. The second output terminal of the power conversion circuit is connected to a first secondary winding of a transformer in the power conversion circuit. The output terminal of the power supply circuit is connected to a second input terminal of the multi-input switching relay.

In the apparatus, the power supply circuit may receive an electrical signal through the target input terminal, and provide electric energy for the multi-input switching relay based on the electrical signal.

In this application, that the power supply circuit selects a target input terminal from the first input terminal and the second input terminal to connect to an output terminal of the power supply circuit, and outputs the electrical signal through the output terminal of the power supply circuit, where a voltage of an electrical signal input at the target input terminal is greater than a voltage of an electrical signal input at an input terminal that is different from the target input terminal and that is of the power supply circuit may be understood as: the power supply circuit outputs, from the output terminal, a higher voltage between voltages of electrical signals that are input at the first input terminal and the second input terminal.

For example, in a short period of time in which a power supply input terminal just receives a power supply signal, if a voltage output by the power conversion circuit to the power supply circuit is less than a voltage output by an auxiliary power supply to the power supply circuit, the power supply circuit selects to provide the voltage output by the auxiliary power supply to the multi-input switching relay as a working voltage. After the power conversion circuit works for a period of time, if a voltage output by a transformer in the power conversion circuit to the power supply circuit is greater than the voltage output by the auxiliary power supply to the power supply circuit, the power supply circuit selects to provide the high voltage output by the power conversioon circuit to the multi-input switching relay as the working voltage.

In this example, a quantity of turns of the first secondary winding may be determined based on an input voltage of the power conversion circuit (that is, an input voltage of the transformer), a quantity of turns of a primary winding of the transformer, and a working voltage of the multi-input switching relay. Generally, a voltage output by the first secondary winding is greater than or equal to an ideal working voltage of the multi-input switching relay.

For example, assuming that the input voltage of the power conversion circuit is 20 volts (V), the quantity of turns of the primary winding of the transformer is 2, and the working voltage of the multi-input switching relay is 50 V, the quantity of turns of the first secondary winding is 5.

In the apparatus, the first secondary winding of the transformer in the power conversion circuit may output a working voltage of the multi-input switching relay, that is, a high working voltage may be provided for the multi-input switching relay without an additional boost circuit, thereby reducing an occupied plate area, reducing driving complexity, and saving costs.

In the apparatus, in a short period of time in which a power supply input terminal just receives a power supply signal, an auxiliary power supply is used to supply power to the multi-input switching relay, so that the multi-input switching relay may also connect the target input terminal to the output terminal in the short period of time.

In some possible implementations, the power supply circuit includes a first switch unit and a second switch unit. An input terminal of the first switch unit is connected to the first input terminal of the power supply circuit, an input terminal of the second switch unit is connected to the second input terminal of the power supply circuit, and an output terminal of the first switch unit and an output terminal of the second switch unit are connected to the output terminal of the power supply circuit.

In the apparatus, by turning on the first switch unit and turning off the second switch unit, the auxiliary power supply provides electric energy for the multi-input switching relay by using the first switch unit, and it can be ensured that no current passes through the second switch unit, thereby improving switching efficiency of the multi-input switching relay.

In addition, by turning on the second switch unit and turning off the first switch unit, the first secondary winding provides electric energy for the multi-input switching relay by using the second switch unit, and it can be ensured that no current passes through the first switch unit, thereby improving switching efficiency of the multi-input switching relay.

In some possible implementations, the first switch unit includes a first diode. An anode of the first diode is connected to the first input terminal of the power supply circuit, and a cathode of the first diode is connected to the output terminal of the power supply circuit.

In the apparatus, based on unidirectional conductivity of a diode, the first diode may be automatically turned on after the auxiliary power supply outputs a voltage, that is, the auxiliary power supply may provide electric energy for the multi-input switching relay without controlling the first switch unit to be turned on, thereby reducing driving complexity of the first switch unit.

Optionally, the first switch unit may include a first field effect transistor (for example, a MOS transistor). A source electrode of the first MOS transistor may be connected to the first input terminal of the power supply circuit, and a drain electrode of the first MOS transistor may be connected to the output terminal of the power supply circuit.

In some possible implementations, the second switch unit includes a second diode. An anode of the second diode is connected to the second input terminal of the power supply circuit, and a cathode of the second diode is connected to the output terminal of the power supply circuit.

In the apparatus, based on unidirectional conductivity of a diode, the second diode may be automatically turned on after the first secondary winding outputs a voltage, that is, the first secondary winding may provide electric energy for the multi-input switching relay without controlling the second switch unit to be turned on, thereby reducing driving complexity of the second switch unit.

Optionally, the second switch unit may include a second MOS transistor. A source electrode of the second MOS transistor may be connected to the second input terminal of the power supply circuit, and a drain electrode of the second MOS transistor may be connected to the output terminal of the power supply circuit.

In some possible implementations, the power supply circuit further includes a capacitor, and the input terminal of the second switch unit is connected to the second input terminal of the power supply circuit through the capacitor.

In the apparatus, the capacitor may be a filter capacitor, and the filter capacitor may filter the voltage output by the first secondary winding, to obtain a stable voltage.

According to a second aspect, this application provides a multi-input power supply. The multi-input power supply includes a plurality of power supply input terminals, a multi-input switching relay, a power conversion circuit, a plurality of auxiliary power supplies, and a control apparatus. Each of the plurality of power supply input terminals is configured to receive a power supply signal. Each of the plurality of power supply input terminals is further configured to be connected to a first input terminal of the multi-input switching relay, and an output terminal of the multi-input switching relay is connected to a first input terminal of the power conversion circuit. The plurality of auxiliary power supplies one-to-one correspond to the plurality of power supply input terminals, a first input terminal of each of the plurality of auxiliary power supplies is connected to a corresponding power supply input terminal in the plurality of power supply input terminals, and an output terminal of each auxiliary power supply is connected to a second input terminal of the power conversion circuit. A first output terminal of the power conversion circuit is configured to be connected to an electric device, and the control apparatus is connected to a third input terminal of the multi-input switching relay, a third input terminal of the power conversion circuit, and a second input terminal of each auxiliary power supply.

The control apparatus is configured to: control the multi-input switching relay to connect a target first input terminal of the multi-input switching relay and the output terminal of the multi-input switching relay. The target first input terminal is a first input terminal connected to a power supply input terminal that is in the plurality of power supply input terminals and that receives a power supply signal.

The control apparatus is further configured to: control a target auxiliary power supply in the plurality of auxiliary power supplies to process an electrical signal input at a first input terminal of the target auxiliary power supply, to obtain an electrical signal with a target voltage, and output the electrical signal from an output terminal. The target auxiliary power supply is an auxiliary power supply connected to a power supply input terminal that is in the plurality of power supply input terminals and that receives a power supply signal, and the target voltage is a working voltage of the power conversion circuit.

The control apparatus is further configured to: control the power conversion circuit to perform power conversion on an electrical signal input at the first input terminal, and output the electrical signal from the first output terminal.

The multi-input power supply further includes a power supply circuit. The power supply circuit is configured to receive an electrical signal through a first input terminal and a second input terminal of the power supply circuit, select a target input terminal from the first input terminal and the second input terminal of the power supply circuit to connect to an output terminal of the power supply circuit, and output the electrical signal through the output terminal. A voltage of an electrical signal input at the target input terminal is greater than a voltage of an electrical signal input at an input terminal that is different from the target input terminal and that is of the power supply circuit.

The first input terminal of the power supply circuit is connected to the output terminal of each auxiliary power supply, and the second input terminal of the power supply circuit is connected to a second output terminal of the power conversion circuit. The second output terminal of the power conversion circuit is connected to a first secondary winding of a transformer in the power conversion circuit. The output terminal of the power supply circuit is connected to a second input terminal of the multi-input switching relay.

In the multi-input power supply, the control apparatus may separately send a control signal to the auxiliary power supply, the multi-input switching relay, and the power conversion circuit, to control the auxiliary power supply to output an electrical signal, control the multi-input switching relay to connect the target first input terminal in the multi-input switching relay to the output terminal, and control the power conversion circuit to perform power conversion on a received electrical signal and output the electrical signal.

Optionally, the control apparatus may further detect whether each of the plurality of power supply input terminals receives a power supply signal.

In an example, when detecting that a first power supply input terminal receives the power supply signal, the control apparatus may control the multi-input switching relay to connect the output terminal of the multi-input switching relay to the first input terminal that is of the multi-input switching relay and that is connected to the first power supply input terminal. In this example, a target power supply input terminal is the first power supply input terminal, and the target first input terminal is the first input terminal that is of the multi-input switching relay and that is connected to the first power supply input terminal.

In another example, when detecting that a first power supply input terminal no longer receives the power supply signal, the control apparatus may control the multi-input switching relay to connect the output terminal of the multi-input switching relay to the first input terminal that is of the multi-input switching relay and that is connected to a second power supply input terminal. The second power supply input terminal is a power supply input terminal that currently receives the power supply signal. In this example, the target power supply input terminal is updated from the first power supply input terminal to the second power supply input terminal, and the target first input terminal is the first input terminal that is of the multi-input switching relay and that is connected to the second power supply input terminal.

In some possible implementations, the power supply circuit includes a first switch unit and a second switch unit. An input terminal of the first switch unit is connected to the first input terminal of the power supply circuit, an input terminal of the second switch unit is connected to the second input terminal of the power supply circuit, and an output terminal of the first switch unit and an output terminal of the second switch unit are connected to the output terminal of the power supply circuit.

In some possible implementations, the first switch unit includes a first diode. An anode of the first diode is connected to the first input terminal of the power supply circuit, and a cathode of the first diode is connected to the output terminal of the power supply circuit.

In some possible implementations, the second switch unit includes a second diode. An anode of the second diode is connected to the second input terminal of the power supply circuit, and a cathode of the second diode is connected to the output terminal of the power supply circuit.

In some possible implementations, the power supply circuit further includes a capacitor, and the input terminal of the second switch unit is connected to the second input terminal of the power supply circuit through the capacitor.

It may be understood that for a technical effect that can be achieved by the power supply circuit in the multi-input power supply, refer to the first aspect. Details are not described herein again.

### BRIEF DESCRIPTION OF DRAWINGS

The accompanying drawings herein are incorporated into the specification and constitute a part of the specification, show embodiments conforming to this application, and are used together with the specification to explain a principle of this application.
FIG. 1 is a schematic diagram of a structure of a multi-input power supply;
FIG. 2 is a schematic diagram of power supply switching apparatus according to an embodiment of this application;
FIG. 3 is a schematic diagram of a power supply circuit according to an embodiment of this application;
FIG. 4 is a schematic diagram of another power supply circuit according to an embodiment of this application;
FIG. 5 is a schematic diagram of still another power supply circuit according to an embodiment of this application; and
FIG. 6 is a schematic diagram of a multi-input power supply according to an embodiment of this application.

The foregoing accompanying drawings show specific embodiments of this application, and more detailed descriptions are provided below. The accompanying drawings and text descriptions are not intended to limit the scope of the idea of this application in any manner, but are intended to describe the concept of this application to a person skilled in the art with reference to particular embodiments.

### DESCRIPTION OF EMBODIMENTS

To understand the objectives, technical solutions, and advantages of this application more clearly, the following provides further descriptions with reference to the accompanying drawings. Clearly, the described embodiments are some but not all of embodiments of this application. All other embodiments obtained based on embodiments of this application shall fall within the protection scope of this application.

An example of a multi-input power supply is a power adapter, which is commonly referred to as a charger. For example, the multi-input power supply may be used as a power supply of a network device such as a server power supply and a router switch, a communication power supply, an uninterruptible power supply (uninterruptible power supply, UPS), or a light emitting diode (light emitting diode, LED) lighting power supply, to supply power to various electric devices such as a display, a server, and a network device.

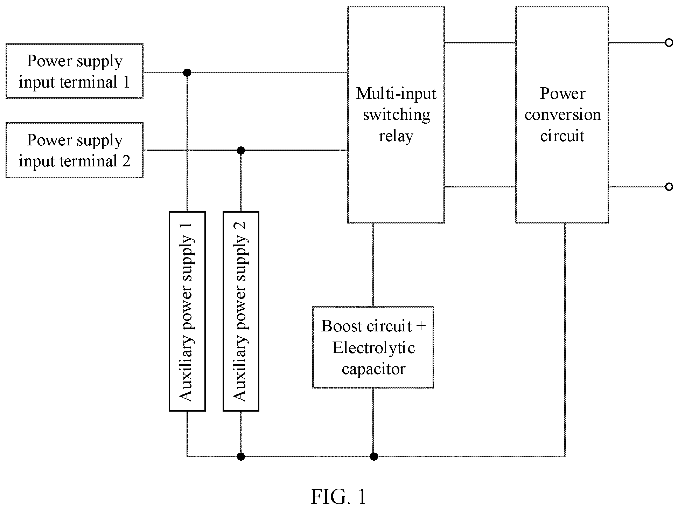

FIG. 1 is a schematic diagram of a structure of a multi-input power supply. As shown in FIG. 1, the multi-input power supply includes two power supply input terminals, a multi-input switching relay, a power conversion circuit, and two auxiliary power supplies.

The two power supply input terminals include a power supply input terminal 1 and a power supply input terminal 2. The power supply input terminal 1 may be configured to input a first electrical signal 1 and output the first electrical signal 1, and the power supply input terminal 2 may be configured to input a first electrical signal 2 and output the first electrical signal 2. The first electrical signals input at the power supply input terminal 1 and the power supply input terminal 2 may be a same electrical signal, or may be different electrical signals.

The multi-input switching relay is a component that is in the multi-input power supply and that is configured to connect a power supply input terminal and a power conversion circuit. The multi-input switching relay may include two first input terminals: a first input terminal 1 and a first input terminal 2. The first input terminal 1 may be connected to the power supply input terminal 1, and the first input terminal 2 may be connected to the power supply input terminal 2. The multi-input switching relay may receive a first electrical signal from the first input terminal 1 and output the first electrical signal, or receive a first electrical signal from the first input terminal 2 and output the first electrical signal.

Optionally, the multi-input switching relay may further be a single-pole double-throw relay, and is configured to connect the power supply input terminal 1 or the power supply input terminal 2 to the power conversion circuit. For example, a knife switch of the multi-input switching relay may be in contact with the power supply input terminal 1 to connect the power supply input terminal 1 to the power conversion circuit. In another example, when an input source of the power supply input terminal 1 is powered off, the multi-input switching relay may switch the knife switch to the power supply input terminal 2, so as to connect the power supply input terminal 2 to the power conversion circuit.

The power conversion circuit includes a transformer. The circuit is configured to receive a voltage from a power supply input terminal, and convert, based on the transformer, the received voltage into a voltage required by an electric device.

For example, the multi-input switching relay connects the power supply input terminal 1 to the power conversion circuit, and the transformer may convert an output voltage of the power supply input terminal 1 into a voltage required by an electric device.

In another example, the multi-input switching relay connects the power supply input terminal 2 to the power conversion circuit, and the transformer may convert an output voltage of the power supply input terminal 2 into a voltage required by an electric device.

The two auxiliary power supplies include an auxiliary power supply 1 and an auxiliary power supply 2. The auxiliary power supply 1 is connected to the power supply input terminal 1, and the auxiliary power supply 2 is connected to the power supply input terminal 2.

The two auxiliary power supplies are configured to provide electric energy for the multi-input switching relay and the power conversion circuit, so as to ensure that the multi-input switching relay and the power conversion circuit can operate normally.

In an example, if the multi-input switching relay connects the power supply input terminal 1 to the power conversion circuit, the auxiliary power supply 1 may provide electric energy for the multi-input switching relay and the power conversion circuit, so that the multi-input switching relay completes switching when the power supply input terminal needs to be switched, and the power conversion circuit completes voltage conversion when a voltage needs to be converted.

In another example, if the multi-input switching relay connects the power supply input terminal 2 to the power conversion circuit, the auxiliary power supply 2 may provide electric energy for the multi-input switching relay and the power conversion circuit, so that the multi-input switching relay completes switching when the power supply input terminal needs to be switched, and the power conversion circuit completes voltage conversion when a voltage needs to be converted.

In this embodiment, because the power conversion circuit needs a low working voltage when performing voltage conversion, the auxiliary power supply outputs a low voltage, so as to prevent the power conversion circuit from being damaged due to an excessively high working voltage. For example, assuming that the working voltage required by the power conversion circuit is 12 V, an output voltage of the auxiliary power supply may be 12 V

However, a working voltage of the multi-input switching relay is high during power supply switching, and is higher than a working voltage of the power conversion circuit. For example, a working voltage required by the power conversion circuit is 12 V, and a voltage required by the multi-input switching relay is 50 V

In this case, if a voltage output by the auxiliary power supply is directly output to the multi-input switching relay as a working voltage, a power supply voltage of the multi-input switching relay is insufficient, resulting in a long switching duration of the multi-input switching relay, and even the switching may fail because the voltage output by the auxiliary power supply is insufficient to complete the switching due to the long switching duration. Therefore, before the auxiliary power supply provides electric energy for the multi-input switching relay, the output voltage of the auxiliary power supply further needs to be boosted, so as to shorten the switching duration of the multi-input switching relay.

Therefore, in the multi-input power supply, a boost circuit is added between the auxiliary power supply and the multi-input switching relay to boost the output voltage of the auxiliary power supply, so as to provide sufficient electric energy for the multi-input switching relay.

The boost circuit includes components such as an inductor, a capacitor, and a switch unit. By controlling the switch unit to be turned on and turned off, the inductor is controlled to store and release electric energy, so as to implement a boost function. The capacitor is configured to perform filtering on a boosted current, to obtain a stable current.

In this method, the boost circuit includes a large quantity of components, resulting in a large occupied board area, complex driving, and high costs. In addition, a large quantity of components in the boost circuit also causes an extra loss, thereby reducing boost efficiency. In view of this, this application provides a new technical solution to resolve the foregoing problem.

In the technical solution of this application, a secondary winding of the transformer in the power conversion circuit is used to provide a working voltage for the multi-input switching relay. In this way, a high working voltage can be provided for the multi-input switching relay without adding components such as a capacitor and an inductor. This can reduce an occupied board area, save costs, and reduce the driving complexity.

As an example, a secondary winding may be added to the transformer of the power conversion circuit to provide a working voltage for the multi-input switching relay. In this technical solution, the newly added secondary winding may also be referred to as an auxiliary winding. A quantity of turns of the secondary winding may be determined based on an input voltage of the power conversion circuit (that is, an input voltage of the transformer), a quantity of turns of a primary winding of the transformer, and a working voltage of the multi-input switching relay.

For example, assuming that the input voltage of the power conversion circuit is 20 V, the quantity of turns of the primary winding of the transformer is 2, and the working voltage of the multi-input switching relay is 50 V, the quantity of turns of the first secondary winding is 5.

In the technical solution of this application, only after the auxiliary power supply provides electric energy for the power conversion circuit, the secondary winding can output a voltage required by the multi-input switching relay. Therefore, an auxiliary power supply is used to supply power to the multi-input switching relay within a short period of time in which the power supply input terminal just receives a power supply signal, that is, a short period of time before the secondary winding can provide electric energy for the multi-input switching relay (the short period of time has no requirement on a switching duration of the relay), so as to ensure that the multi-input switching relay can also switch the input source within the short period of time.

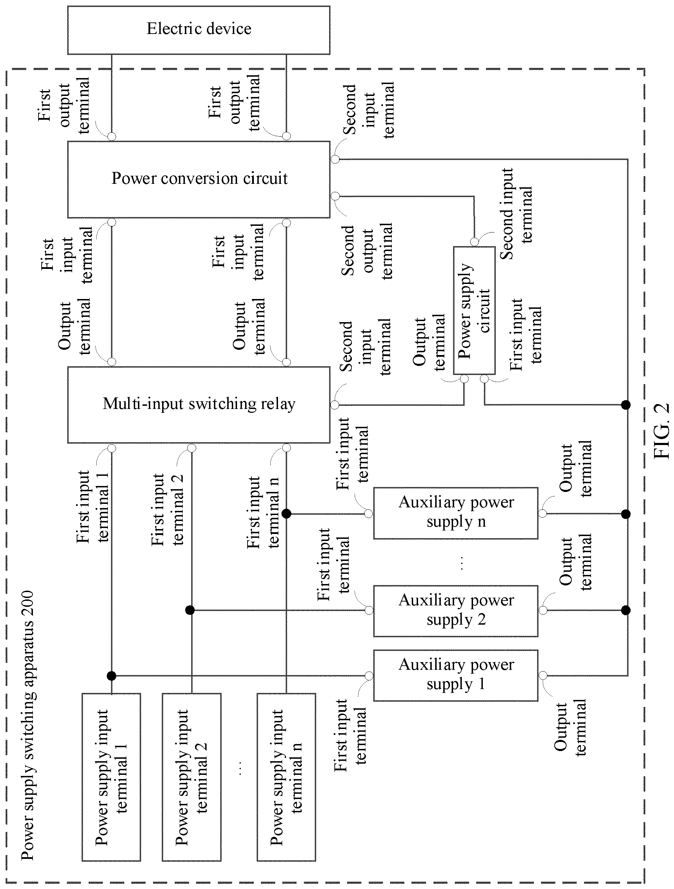

FIG. 2 is a schematic diagram of power supply switching apparatus according to an embodiment of this application. As shown in FIG. 2, the power supply switching apparatus 200 may include n power supply input terminals, a multi-input switching relay, a power conversion circuit, and n auxiliary power supplies. The n power supply input terminals one-to-one correspond to the n auxiliary power supplies, and n is an integer greater than or equal to 2.

The n power supply input terminals include a power supply input terminal 1, a power supply input terminal 2, ..., and a power supply input terminal n. Each of the n power supply input terminals may be independently configured to input an electrical signal and output the electrical signal to the multi-input switching relay.

For example, the power supply input terminal 1 is configured to input a first electrical signal 1 and output the first electrical signal 1. The power supply input terminal 2 is configured to input a first electrical signal 2 and output the first electrical signal 2. By analogy, the power supply input terminal n is configured to input a first electrical signal n and output the first electrical signal n.

The electrical signal input at each of the n power supply input terminals may be an electrical signal sent by a same power supply, or may be electrical signals sent by different power supplies.

The multi-input switching relay is configured to output, from the output terminal to the power conversion circuit, an electrical signal input at a power supply input terminal to which the electrical signal is input and that is in a plurality of power supply input terminals.

In an example, the multi-input switching relay may include n first input terminals: a first input terminal 1, a first input terminal 2, ..., and a first input terminal n. The n power supply input terminals may be one-to-one connected to the n first input terminals of the multi-input switching relay.

The multi-input switching relay may receive a first electrical signal from a power supply input terminal through a first input terminal. For example, the multi-input switching relay may receive a first electrical signal from the power supply input terminal 1 through the first input terminal 1. The multi-input switching relay may receive a first electrical signal from the power supply input terminal 2 through the first input terminal 2. By analogy, the multi-input switching relay may receive a first electrical signal from the power supply input terminal n through the first input terminal n.

The multi-input switching relay further includes a second input terminal and an output terminal. The multi-input switching relay may receive a second electrical signal through a second input terminal, select, under driving of the second electrical signal, to connect a target first input terminal in the n first input terminals to the output terminal, and output, after receiving a first electrical signal from the target first input terminal, the first electrical signal from the output terminal. The target first input terminal is a first input terminal connected to a target power supply input terminal, and the target power supply input terminal is a power supply input terminal that receives a power supply signal and that is in the n power supply input terminals.

In another example, the multi-input switching relay may be a single-pole multiple-throw relay, that is, the multi-input switching relay may include one first input terminal. If an electrical signal is input to a power supply input terminal of the n power supply input terminals, the first input terminal may be connected to the power supply input terminal, so as to receive the electrical signal from the power supply input terminal, and the multi-input switching relay outputs the electrical signal through the output terminal under driving of a working voltage input at the second input terminal.

The power conversion circuit includes a transformer, a first input terminal, a second input terminal, and a first output terminal. The first input terminal of the power conversion circuit is connected to the output terminal of the multi-input switching relay, so that the power conversion circuit may receive the first electrical signal through the first input terminal. In addition, the power conversion circuit may further receive the second electrical signal through the second input terminal, and the first output terminal of the power conversion circuit may be connected to an electric device. In this way, the power conversion circuit may perform, under driving of the second electrical signal, power conversion on the first electrical signal based on the transformer to obtain a third electrical signal required by the electric device, and output the third electrical signal through the first output terminal.

The power conversion circuit may further include a second output terminal. The second output terminal of the power conversion circuit is connected to a first secondary winding of the transformer in the power conversion circuit.

The power conversion circuit may include any one or more of an alternating current/direct current (AC/DC) conversion circuit, a direct current/alternating current (DC/AC) conversion circuit, a direct current/direct current (DC/DC) conversion circuit, and an alternating current/alternating current (AC/AC) conversion circuit.

The n auxiliary power supplies may include an auxiliary power supply 1, an auxiliary power supply 2, ..., and an auxiliary power supply n. The n auxiliary power supplies one-to-one correspond to the n power supply input terminals, and a first input terminal of each of the n auxiliary power supplies is connected to a corresponding power supply input terminal of the n power supply input terminals. For example, the auxiliary power supply 1 is connected to the power supply input terminal 1, and the auxiliary power supply 2 is connected to the power supply input terminal 2. By analogy, the auxiliary power supply n is connected to the power supply input terminal n.

An output terminal of each of the n auxiliary power supplies is connected to the second input terminal of the power conversion circuit. An auxiliary power supply may receive a first electrical signal through an input terminal, process the first electrical signal to obtain a second electrical signal that has a same working voltage as the power conversion circuit, and output the second electrical signal through an output terminal.

The power supply switching apparatus 200 further includes a power supply circuit. The power supply circuit may include a first input terminal, a second input terminal, and an output terminal.

The first input terminal of the power supply circuit is connected to the output terminal of each of the n auxiliary power supplies, and the second input terminal of the power supply circuit is connected to the second output terminal of the power conversion circuit. The second output terminal of the power conversion circuit is connected to the first secondary winding of the transformer in the power conversion circuit. The output terminal of the power supply circuit is connected to the second input terminal of the multi-input switching relay.

A quantity of turns of the first secondary winding may be determined based on an input voltage of the power conversion circuit (that is, an input voltage of the transformer), a quantity of turns of a primary winding of the transformer, and a working voltage of the multi-input switching relay.

For example, assuming that the input voltage of the power conversion circuit is 20 V, the quantity of turns of the primary winding of the transformer is 2, and the working voltage of the multi-input switching relay is 50 V, the quantity of turns of the first secondary winding is 5.

The power supply circuit is configured to receive an electrical signal through the first input terminal and the second input terminal of the power supply circuit, select a target input terminal from the first input terminal and the second input terminal of the power supply circuit to connect to the output terminal of the power supply circuit, and output the electrical signal through the output terminal of the power supply circuit. A voltage of an electrical signal input at the target input terminal is greater than a voltage of an electrical signal input at an input terminal that is different from the target input terminal and that is of the power supply circuit.

In the apparatus, both the auxiliary power supply and the first secondary winding may provide electric energy for the multi-input switching relay. The auxiliary power supply may provide electric energy for the multi-input switching relay and the power conversion circuit in a short period of time when the power supply input terminal just receives a power supply signal, so that the multi-input switching relay may perform switching in the period of time, and the power conversion circuit receives a sufficient power supply voltage in the period of time, thereby obtaining a voltage required by the electric device and an output voltage of the first secondary winding. After working for a period of time, the power conversion circuit may provide electric energy for the multi-input switching relay based on the output voltage of the first secondary winding. The output voltage of the first secondary winding is the same as a working voltage required by the multi-input switching relay. In this way, a high working voltage can be provided for the multi-input switching relay without adding another component. Compared with the prior art in which an additional boost circuit is used to boost the auxiliary power supply, this can reduce an occupied board area, save costs, and reduce driving complexity.

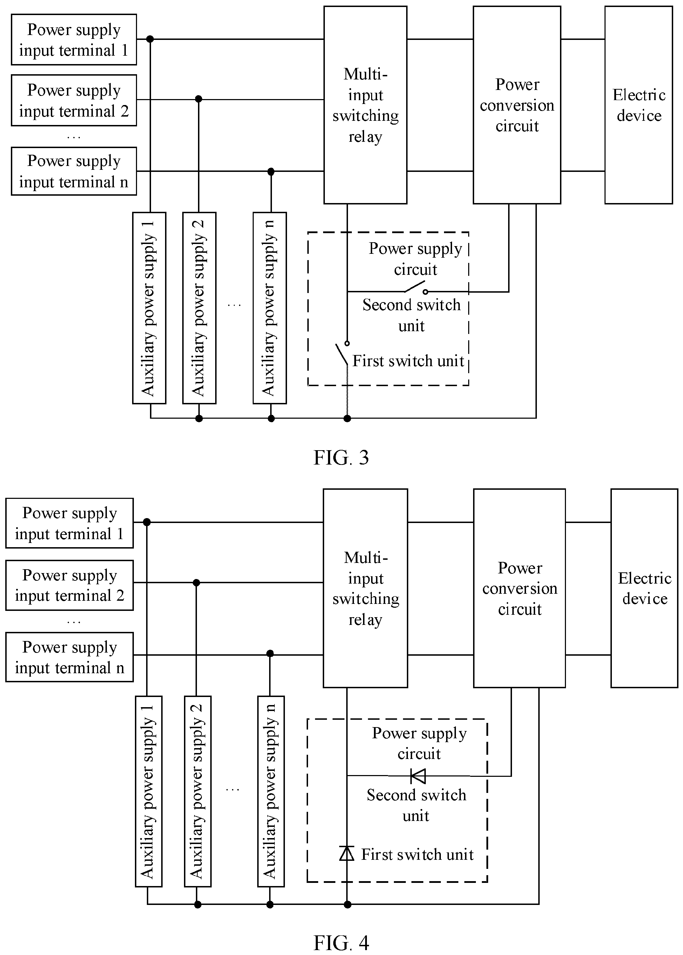

FIG. 3 is a schematic diagram of a power supply circuit according to an embodiment of this application. As shown in FIG. 3, the power supply circuit may include a first switch unit and a second switch unit.

An input terminal of the first switch unit is connected to the first input terminal of the power supply circuit, an input terminal of the second switch unit is connected to the second input terminal of the power supply circuit, and an output terminal of the first switch unit and an output terminal of the second switch unit are connected to the output terminal of the power supply circuit.

In the apparatus, in a short period of time in which the power supply input terminal just receives a power supply signal, by turning on the first switch unit and turning off the second switch unit, the auxiliary power supply provides electric energy for the multi-input switching relay by using the first switch unit, and it can be ensured that no current passes through the second switch unit, thereby improving switching efficiency of the multi-input switching relay in the period of time.

After the power conversion circuit works for a period of time, by turning on the second switch unit and turning off the first switch unit, the first secondary winding provides electric energy for the multi-input switching relay by using the second switch unit, and it can be ensured that no current passes through the first switch unit, thereby improving switching efficiency of the multi-input switching relay in the period of time.

FIG. 4 is a schematic diagram of another power supply circuit according to an embodiment of this application. As shown in FIG. 4, the first switch unit in the power supply circuit may include a first diode. An anode of the first diode is connected to the first input terminal of the power supply circuit, and a cathode of the first diode is connected to the output terminal of the power supply circuit.

In the apparatus, based on unidirectional conductivity of a diode, the first diode may be automatically turned on after the auxiliary power supply outputs a voltage, that is, the auxiliary power supply may provide electric energy for the multi-input switching relay without controlling the first switch unit to be turned on, thereby reducing driving complexity of the first switch unit.

Optionally, the first switch unit may include a first field effect transistor (MOS). A source electrode of the first MOS transistor may be connected to the first input terminal of the power supply circuit, and a drain electrode of the first MOS transistor may be connected to the output terminal of the power supply circuit.

In addition, the second switch unit in the power supply circuit may include a second diode. An anode of the second diode is connected to the second input terminal of the power supply circuit, and a cathode of the second diode is connected to the output terminal of the power supply circuit.

In the apparatus, based on unidirectional conductivity of a diode, the second diode may be automatically turned on after the first secondary winding outputs a voltage, that is, the first secondary winding may provide electric energy for the multi-input switching relay without controlling the second switch unit to be turned on, thereby reducing driving complexity of the second switch unit.

Optionally, the second switch unit may include a second MOS transistor. A source electrode of the second MOS transistor may be connected to the second input terminal of the power supply circuit, and a drain electrode of the second MOS transistor may be connected to the output terminal of the power supply circuit.

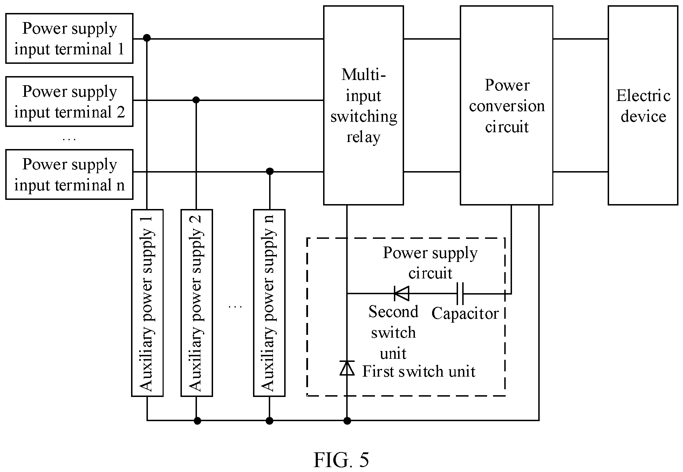

FIG. 5 is a schematic diagram of still another power supply circuit according to an embodiment of this application. As shown in FIG. 5, the power supply circuit further includes a capacitor, and the input terminal of the second switch unit is connected to the second input terminal of the power supply circuit through the capacitor.

In the apparatus, the capacitor may be a filter capacitor, and may be configured to filter the voltage output by the first secondary winding, to obtain a stable voltage.

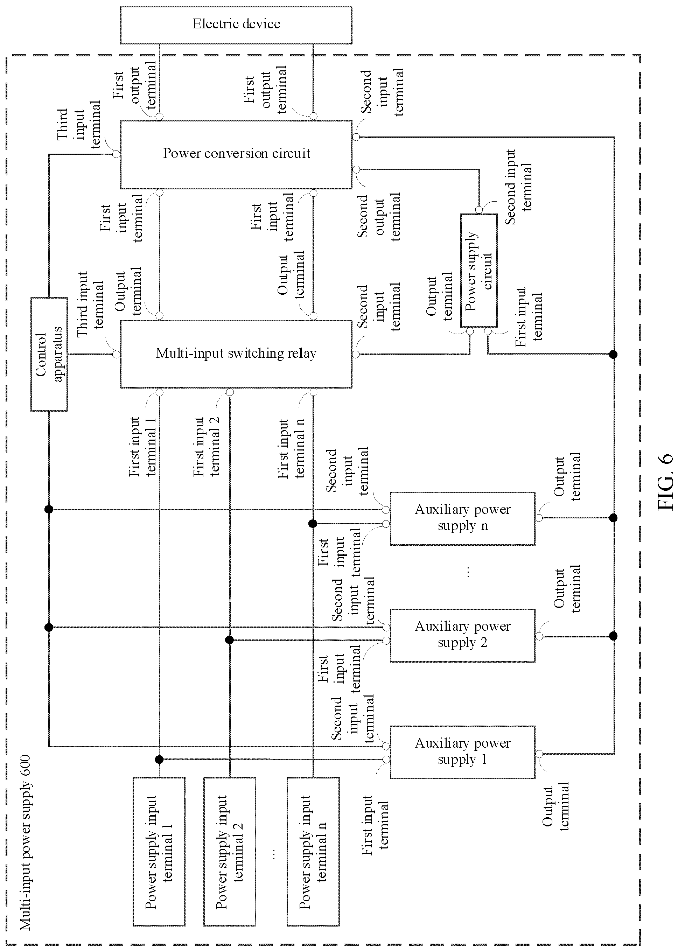

FIG. 6 is a schematic diagram of a multi-input power supply according to an embodiment of this application. As shown in FIG. 6, the multi-input power supply 600 includes n power supply input terminals, a multi-input switching relay, a power conversion circuit, n auxiliary power supplies, and a control apparatus.

Each of the n power supply input terminals is configured to receive a power supply signal. Each of the n power supply input terminals is further configured to be connected to a first input terminal of the multi-input switching relay, and an output terminal of the multi-input switching relay is connected to a first input terminal of the power conversion circuit. The n auxiliary power supplies one-to-one correspond to the n power supply input terminals, a first input terminal of each of the n auxiliary power supplies is connected to a corresponding power supply input terminal in the n power supply input terminals, and an output terminal of each auxiliary power supply is connected to a second input terminal of the power conversion circuit. A first output terminal of the power conversion circuit is configured to be connected to an electric device, and the control apparatus is connected to a third input terminal of the multi-input switching relay, a third input terminal of the power conversion circuit, and a second input terminal of each auxiliary power supply.

In the multi-input power supply, the control apparatus may be configured to: control the multi-input switching relay to connect a target first input terminal of the multi-input switching relay and the output terminal of the multi-input switching relay. The target first input terminal is a first input terminal connected to a target power supply input terminal, and the target power supply input terminal is a power supply input terminal that is in the n power supply input terminals and that receives a power supply signal.

The control apparatus may further be configured to: control a target auxiliary power supply in the n auxiliary power supplies to process an electrical signal input at a first input terminal of the target auxiliary power supply, to obtain an electrical signal with a target voltage, and output the electrical signal from an output terminal. The target auxiliary power supply is an auxiliary power supply connected to the target power supply input terminal, and the target voltage is a working voltage of the power conversion circuit.

The control apparatus may further be configured to: control the power conversion circuit to perform power conversion on an electrical signal input at the first input terminal, and output the electrical signal from the first output terminal.

The multi-input power supply 600 may further include a power supply circuit. The power supply circuit is configured to receive an electrical signal through a first input terminal and a second input terminal of the power supply circuit, select a target input terminal from the first input terminal and the second input terminal of the power supply circuit to connect to an output terminal of the power supply circuit, and output the electrical signal through the output terminal. A voltage of an electrical signal input at the target input terminal is greater than a voltage of an electrical signal input at an input terminal that is different from the target input terminal and that is of the power supply circuit.

The first input terminal of the power supply circuit is connected to the output terminal of each auxiliary power supply, and the second input terminal of the power supply circuit is connected to a second output terminal of the power conversion circuit. The second output terminal of the power conversion circuit is connected to a first secondary winding of a transformer in the power conversion circuit. The output terminal of the power supply circuit is connected to a second input terminal of the multi-input switching relay.

The power supply circuit may include a first switch unit and a second switch unit. An input terminal of the first switch unit is connected to the first input terminal of the power supply circuit, an input terminal of the second switch unit is connected to the second input terminal of the power supply circuit, and an output terminal of the first switch unit and an output terminal of the second switch unit are connected to the output terminal of the power supply circuit.

The first switch unit may include a first diode. An anode of the first diode is connected to the first input terminal of the power supply circuit, and a cathode of the first diode is connected to the output terminal of the power supply circuit.

Optionally, the first switch unit may include a first MOS transistor. A source electrode of the first MOS transistor is connected to the first input terminal of the power supply circuit, and a drain electrode of the first MOS transistor is connected to the output terminal of the power supply circuit.

When the first switch unit includes a first MOS transistor, the control apparatus may also be connected to the first MOS transistor, to control the first MOS transistor to be turned on or turned off.

The second switch unit may include a second diode. An anode of the second diode is connected to the second input terminal of the power supply circuit, and a cathode of the second diode is connected to the output terminal of the power supply circuit.

Optionally, the second switch unit may include a second MOS transistor. A source electrode of the second MOS transistor may be connected to the second input terminal of the power supply circuit, and a drain electrode of the second MOS transistor may be connected to the output terminal of the power supply circuit.

When the second switch unit includes a second MOS transistor, the control apparatus may also be connected to the second MOS transistor, to control the second MOS transistor to be turned on or turned off.

Optionally, the control apparatus may further be connected to the n power supply input terminals. The control apparatus may further detect whether each of the n power supply input terminals receives a power supply signal.

In an example, when detecting that a first power supply input terminal receives the power supply signal, the control apparatus may control the multi-input switching relay to connect the output terminal of the multi-input switching relay to the first input terminal that is of the multi-input switching relay and that is connected to the first power supply input terminal. In this example, a target power supply input terminal is the first power supply input terminal, and the target first input terminal is the first input terminal that is of the multi-input switching relay and that is connected to the first power supply input terminal.

For example, assuming that the first power supply input terminal is a power supply input terminal 1, the control apparatus may control the multi-input switching relay to connect the first input terminal 1 to the output terminal of the multi-input switching relay. The first input terminal 1 is a first input terminal that is in the multi-input switching relay and that is connected to the power supply input terminal 1.

In another example, when detecting that a first power supply input terminal no longer receives the power supply signal, the control apparatus may control the multi-input switching relay to connect the output terminal of the multi-input switching relay to the first input terminal that is of the multi-input switching relay and that is connected to a second power supply input terminal. The second power supply input terminal is a power supply input terminal that currently receives the power supply signal. In this example, the target power supply input terminal is updated from the first power supply input terminal to the second power supply input terminal, and the target first input terminal is the first input terminal that is of the multi-input switching relay and that is connected to the second power supply input terminal.

For example, it is assumed that the first power supply input terminal is a power supply input terminal 1, and the second power supply input terminal is a power supply input terminal 2. When detecting that the power supply input terminal 1 no longer receives a power supply signal, the control apparatus may control the first input terminal 1 of the multi-input switching relay to stop connecting to the output terminal of the multi-input switching relay, and control a first input terminal 2 to be connected to the output terminal of the multi-input switching relay. The first input terminal 2 is a first input terminal that is in the multi-input switching relay and that is connected to the power supply input terminal 2.

In this embodiment, the control apparatus may be a controller, a control circuit, or a control chip. This is not limited in this application.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. The term "a plurality of in this specification means two or more than two. The term "and/or" in this specification describes only an association relationship for describing associated objects and indicates that there may be three relationships. For example, A and/or B may represent the following three cases: Only A exists, both A and B exist, and only B exists. In addition, the character "/" in this specification usually indicates an "or" relationship between the associated objects. In the formula, the character "/" indicates a "division" relationship between the associated objects.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined according to functions and internal logic of the processes, and should not be construed as any limitation on the implementation processes of embodiments of this application.

## Claims

1. A power supply switching apparatus, comprising a plurality of power supply input terminals, a multi-input switching relay, a power conversion circuit, and a plurality of auxiliary power supplies, wherein each of the plurality of power supply input terminals is configured to receive a power supply signal, each of the plurality of power supply input terminals is further configured to be connected to a first input terminal of the multi-input switching relay, an output terminal of the multi-input switching relay is connected to a first input terminal of the power conversion circuit, the plurality of auxiliary power supplies one-to-one correspond to the plurality of power supply input terminals, a first input terminal of each of the plurality of auxiliary power supplies is connected to a corresponding power supply input terminal in the plurality of power supply input terminals, an output terminal of each auxiliary power supply is connected to a second input terminal of the power conversion circuit, and a first output terminal of the power conversion circuit is configured to be connected to an electric device;
the power supply switching apparatus further comprises a power supply circuit, wherein the power supply circuit is configured to receive an electrical signal through a first input terminal and a second input terminal of the power supply circuit, select a target input terminal from the first input terminal and the second input terminal of the power supply circuit to connect to an output terminal of the power supply circuit, and output an electrical signal through the output terminal of the power supply circuit, wherein a voltage of an electrical signal input at the target input terminal is greater than a voltage of an electrical signal input at an input terminal that is different from the target input terminal and that is of the power supply circuit; and
the first input terminal of the power supply circuit is connected to the output terminal of each auxiliary power supply, the second input terminal of the power supply circuit is connected to a second output terminal of the power conversion circuit, the second output terminal of the power conversion circuit is connected to a first secondary winding of a transformer in the power conversion circuit, and the output terminal of the power supply circuit is connected to a second input terminal of the multi-input switching relay.

2. The apparatus according to claim 1, wherein the power supply circuit comprises a first switch unit and a second switch unit, an input terminal of the first switch unit is connected to the first input terminal of the power supply circuit, an input terminal of the second switch unit is connected to the second input terminal of the power supply circuit, and an output terminal of the first switch unit and an output terminal of the second switch unit are connected to the output terminal of the power supply circuit.

3. The apparatus according to claim 2, wherein the first switch unit comprises a first diode, an anode of the first diode is connected to the first input terminal of the power supply circuit, and a cathode of the first diode is connected to the output terminal of the power supply circuit.

4. The apparatus according to claim 2 or 3, wherein the second switch unit comprises a second diode, an anode of the second diode is connected to the second input terminal of the power supply circuit, and a cathode of the second diode is connected to the output terminal of the power supply circuit.

5. The apparatus according to any one of claims 1 to 4, wherein the power supply circuit further comprises a capacitor, and the input terminal of the second switch unit is connected to the second input terminal of the power supply circuit through the capacitor.

6. A multi-input power supply, comprising a plurality of power supply input terminals, a multi-input switching relay, a power conversion circuit, a plurality of auxiliary power supplies, and a control apparatus, wherein each of the plurality of power supply input terminals is configured to receive a power supply signal, each of the plurality of power supply input terminals is further configured to be connected to a first input terminal of the multi-input switching relay, an output terminal of the multi-input switching relay is connected to a first input terminal of the power conversion circuit, the plurality of auxiliary power supplies one-to-one correspond to the plurality of power supply input terminals, a first input terminal of each of the plurality of auxiliary power supplies is connected to a corresponding power supply input terminal in the plurality of power supply input terminals, an output terminal of each auxiliary power supply is connected to a second input terminal of the power conversion circuit, a first output terminal of the power conversion circuit is configured to be connected to an electric device, and the control apparatus is connected to a third input terminal of the multi-input switching relay, a third input terminal of the power conversion circuit, and a second input terminal of each auxiliary power supply;
the control apparatus is configured to: control the multi-input switching relay to connect a target first input terminal of the multi-input switching relay and the output terminal of the multi-input switching relay, wherein the target first input terminal is a first input terminal connected to a power supply input terminal that is in the plurality of power supply input terminals and that receives a power supply signal;
the control apparatus is further configured to: control a target auxiliary power supply in the plurality of auxiliary power supplies to process an electrical signal input at a first input terminal of the target auxiliary power supply, to obtain an electrical signal with a target voltage, and output the electrical signal from an output terminal, wherein the target auxiliary power supply is an auxiliary power supply connected to a power supply input terminal that is in the plurality of power supply input terminals and that receives a power supply signal, and the target voltage is a working voltage of the power conversion circuit;
the control apparatus is further configured to: control the power conversion circuit to perform power conversion on an electrical signal input at the first input terminal, and output the electrical signal from the first output terminal;
the multi-input power supply further comprises a power supply circuit, wherein the power supply circuit is configured to receive an electrical signal through a first input terminal and a second input terminal of the power supply circuit, select a target input terminal from the first input terminal and the second input terminal of the power supply circuit to connect to an output terminal of the power supply circuit, and output an electrical signal through the output terminal, wherein a voltage of an electrical signal input at the target input terminal is greater than a voltage of an electrical signal input at an input terminal that is different from the target input terminal and that is of the power supply circuit; and
the first input terminal of the power supply circuit is connected to the output terminal of each auxiliary power supply, the second input terminal of the power supply circuit is connected to a second output terminal of the power conversion circuit, the second output terminal of the power conversion circuit is connected to a first secondary winding of a transformer in the power conversion circuit, and the output terminal of the power supply circuit is connected to a second input terminal of the multi-input switching relay.

7. The apparatus according to claim 6, wherein the power supply circuit comprises a first switch unit and a second switch unit, an input terminal of the first switch unit is connected to the first input terminal of the power supply circuit, an input terminal of the second switch unit is connected to the second input terminal of the power supply circuit, and an output terminal of the first switch unit and an output terminal of the second switch unit are connected to the output terminal of the power supply circuit.

8. The apparatus according to claim 7, wherein the first switch unit comprises a first diode, wherein an anode of the first diode is connected to the first input terminal of the power supply circuit, and a cathode of the first diode is connected to the output terminal of the power supply circuit.

9. The apparatus according to claim 7 or 8, wherein the second switch unit comprises a second diode, an anode of the second diode is connected to the second input terminal of the power supply circuit, and a cathode of the second diode is connected to the output terminal of the power supply circuit.

10. The apparatus according to any one of claims 6 to 9, wherein the power supply circuit further comprises a capacitor, and the input terminal of the second switch unit is connected to the second input terminal of the power supply circuit through the capacitor.
